# EUROPÄISCHE PATENTSCHRIFT

(11) **EP 1 419 946 B1**
(45) Veröffentlichungstag und Bekanntmachung des Hinweises auf die Patenterteilung: **20.12.2006**
(21) Anmeldenummer: 03020231.1
(22) Anmeldetag: 06.09.2003
(51) Int. Cl.: B60T 8/00

(54) **ABS-Regellogik mit Gelände-Modul**
ABS control logic comprising an offroad module
Logique de réglage ABS comportant un module tous terrains

(30) Priorität: 16.11.2002 DE 10253536
(43) Veröffentlichungstag der Anmeldung: 19.05.2004
(73) Patentinhaber: WABCO GmbH & Co. OHG, 30432 Hannover (DE)
(72) Erfinder: Pannbacker, Helmut, 30966 Hemmingen (DE)
(74) Vertreter: Schrödter, Manfred

(56) Entgegenhaltungen:
- EP-A- 0 307 588
- EP-A- 0 425 810
- DE-A- 2 758 529
- DE-A- 4 027 785
- DE-A- 19 601 529
- DE-A- 19 955 512

## Beschreibung

Die Erfindung bezieht sich auf ein Verfahren zur Regelung des Bremsdruckes bei einem Fahrzeug mit Antiblockiersystem (ABS) in einem Gelände-Modus gemäß dem Oberbegriff des Patentanspruchs 1.

Normale Antiblockiersysteme (ABS) sind für den Straßenbetrieb optimiert und ermöglichen hier einen minimalen Bremsweg bei ausreichender Seitenführungskraft. Es hat sich jedoch gezeigt, daß derartige Antiblockiersysteme bei speziellen, selten vorkommenden Straßenoberflächen, wie losem Kies, Schotter, Geröll, loser Erde, Matsch oder hohem Schnee einen längeren Bremsweg benötigen können, als dies mit ständig blockierten Rädern möglich wäre ("Blockierbremsung"). Ursache hierfür ist, daß sich bei derartigen Oberflächen, die häufig auch im Gelände anzutreffen sind, ein "Keil" aus dem Oberflächenmaterial vor den blockierten Rädern bildet, der eine erhebliche Abbremsung verursacht. Nachteilig ist bei einer solchen Blockierbremsung, daß das Fahrzeug nicht mehr lenkbar ist.

Aus der DE-A-22 58 317 ist ein Antiblockiersystem bekannt, bei welchem zur Verkürzung des Bremsweges auf den obengenannten speziellen Straßenoberflächen ein zeitweiliges Blockieren der Räder zugelassen wird. Dies wird dadurch bewirkt, daß in vorgegebenen kurzen Zeitabständen die ABS-Regelung an einem oder mehreren Rädern unterdrückt, d. h. abgeschaltet, wird. Hierdurch wird der volle, vom Fahrer eingesteuerte Bremsdruck zum Rad durchgeleitet, wodurch dieses blockiert.

Weiter ist aus der EP-B1-0 475 010 eine Regelung für eine blockiergeschützte Fahrzeugbremsanlage bekannt, bei welcher eine spezielle Regellogik ("Gelände-Modus") vom Fahrer mittels eines Gelände-Schalters einschaltbar ist. Hierdurch wird während des Auftretens eines Radverzögerungssignals Bremsdruck in die Radbremszylinder eingesteuert, und zwar so lange, bis das betreffende Rad blockiert. Anschließend wird der dann erreichte Bremsdruck für eine festgelegte Druckhaltephase konstant gehalten. Hierdurch ergeben sich Blockierphasen der Räder, die eine konstante Dauer aufweisen, und etwa 240 Millisekunden lang sind.

Aus der DE 27 58 529 A ist ein Antiblockierregelsystem bekannt, mit einer Prüfschaltung, welche beim Auftreten eines die Blockiemeigung eines Rades anzeigenden Signals einen Test einleitet. Hiermit stellt die Prüfschaltung fest, wie sich das Rad bei dem gegebenen Haftbeiwert verhält. Abhängig vom Prüfergebnis wird der Bremsdruck anschließend entweder geregelt oder die Regelung für wenigstens einen Teil der Radbremsen unwirksam gemacht, wodurch diese Räder blockieren. Der Bremsdruck der Hinterräder kann alternativ auch periodisch gesteuert werden, oder es kann an den Rädern der Hinterachse die Regelung beibehalten werden. An den Vorderrädern kann abwechselnd die Regelung an- und abgeschaltet werden, um so zwischen Blockier- und Rollphasen zu wechseln.

Weiter ist aus der DE 40 27 785 A eine Regellogik für eine blockiergeschützte Fahrzeugbremsanlage bekannt, wobei der Fahrer mittels eines Geländeschalters auf eine spezielle Logik für Geländebetrieb umschalten kann. Diese zeichnet sich dadurch aus, dass bewusst ein kurzzeitiges Blockieren der geregelten Räder zugelassen wird. Hierdurch wird es möglich, bei Bremsungen auf losem Kies, Schotter und hohem Schnee eine erhöhte Bremswirkung von "Keilen" aus dem Oberflächenmaterial vor den blockierten Rädern auszunutzen.

Weiter ist aus der EP-A-0 425 810 ein Kraftfahrzeug mit verschiedenen Bremsenbetätigungsprogrammen bekannt, welche in einem Elektronikteil eingespeichert sind. Diese können vom Fahrer durch unterschiedlich starke Betätigung des Bremspedals aktiviert werden, wodurch sich eine an die jeweiligen Geländeverhältnisse angepasste Abbremsung erzielen lässt. Unter anderem ist dabei unterhalb einer zweiten Geschwindigkeitsschwelle einer derartige Druckbeaufschlagung der Bremsen möglich, dass ein Blockieren der Räder ausdrücklich zugelassen wird. Hierdurch können sich insbesondere bei losem Untergrund wie Kies oder Tiefschnee vor den Rädern Materialkeile aufbauen, die wesentlich mit zur Abbremsung beitragen.

Schließlich ist aus der DE 199 55 512 A ein Verfahren und Vorrichtung zur Einstellung der Bremswirkung an den Rädern eines Kraftfahrzeugs bekannt, bei welcher eine Reibgröße ermittelt wird, welche den Reibbeiwert an einem Rad oder an mehreren Rädern der Hinterachse repräsentiert. Hiervor abhängig wird wenigstens eine der Vergleichsgrößen an einem Rad oder mehreren Rädem der Vorderachse modifiziert. Unterhalb einer Geschwindigkeitsschwelle wird bei erkannter Gelände-Untersetzung des Getriebes eine Modifikation der Vorderachsregelung vorgenommen, so dass die Vorderräder erhöhte Blockiemeigung zeigen. Ein bewusstes Blockieren der Räder ist der Schrift jedoch nicht zu entnehmen.

Es hat sich in Versuchen gezeigt, daß bei den bekannten Gelände-ABS-Systemen, insbesondere bei Fahrzeugen ohne automatisch lastabhängige Bremse (ALB), die Fahrstabilität während einer Bremsung im bekannten Gelände-Modus noch zu wünschen übrig läßt. Dies gilt vor allem auf Fahrbahnen mit µ-Split, d. h. rechts und links stark unterschiedlicher Straßenbeschaffenheit. Dies gilt weiter sowohl bei realen Bremsungen im Gelände als auch bei der Typenprüfung (Homologation) des Fahrzeugs während der Zulassung. Bei Fahrzeugen ohne ALB kann es da-bei vorkommen, daß beide Hinterräder mit großen Amplituden regeln und das Fahrzeug dadurch instabil wird.

Dagegen ist dieser Effekt bei Fahrzeugen mit ALB weniger gravierend, da hierbei bei unbeladenem, leichten Fahrzeug automatisch der Bremsdruck herabgesetzt wird, wodurch die Regelung mit kleineren Bremsdruck-Amplituden arbeitet.

Der Erfindung liegt die Aufgabe zugrunde, ein Verfahren zur ABS-Bremsung eines Fahrzeugs, vorzugsweise ohne ALB, anzugeben, bei welcher die oben erwähnten Instabilitäten nicht mehr auftreten und gleichzeitig ein ausreichend kurzer Bremsweg gewährleistet ist.

Diese Aufgabe wird durch die im Patentanspruch 1 enthaltene Erfindung gelöst. Die Unteransprüche enthalten zweckmäßige Weiterbildungen.

Gegenüber dem Stand der Technik unterscheidet sich die Erfindung dadurch, daß nur an den Vorderrädern eine ABS-Bremsung mit einem speziellen Gelände-Modus erfolgt, bei welchem sich die Vorderräder infolge kurzer Blockierphasen in den Untergrund eingraben können und hierdurch eine hohe Abbremsung erzeugen. Dagegen wird diese Regelung an der Hinterachse nicht angewendet. Statt dessen werden die Räder der Hinterachse von der normalen Indiviudalregelung (IR) auf eine Select-Low-Regelung (SLR) oder auf eine modifizierte Achsregelung (MAR) umgeschaltet. Dies gilt in einem Geschwindigkeitsbereich des Fahrzeugs von etwa 40 km/h bis etwa 15 km/h.

Die Erfindung wird im folgenden anhand einer Zeichung näher erläutert.

Diese zeigt in
- Fig. 1: ein schematisches Blockschaltbild eines Antiblockiersystems für ein Rad mit elektronischem und pneumatischen Teil.
- Fig. 2: Diagramme der Radgeschwindigkeit, der Regelsignale des ABS und des Bremsdruckes über der Zeit für eine Gelände-Regellogik.
- Fig. 3a: die Radgeschwindigkeit eines Rades der Vorderachse des erfindungsgemäßen Regelverfahrens im Geschwindigkeitsbereich von 40 km/h bis 15 km/h.
- Fig. 3b: die Radgeschwindigkeit eines Rades der Hinterachse beim erfindungsgemäßen Verfahren bei einer Fahrzeuggeschwindigkeit von 40 km/h bis 15 km/h.
- Fig. 4a: die Radgeschwindigkeit eines Rades der Vorderachse beim erfindungsgemäßen Verfahren bei einer Fahrzeuggeschwindigkeit von 15 km/h bis 0 km/h.
- Fig. 4b: die Radgeschwindigkeit eines Rades der Hinterachse beim erfindungsgemäßen Verfahren bei einer Fahrzeuggeschwindigkeit von 15 km/h bis 0 km/h.

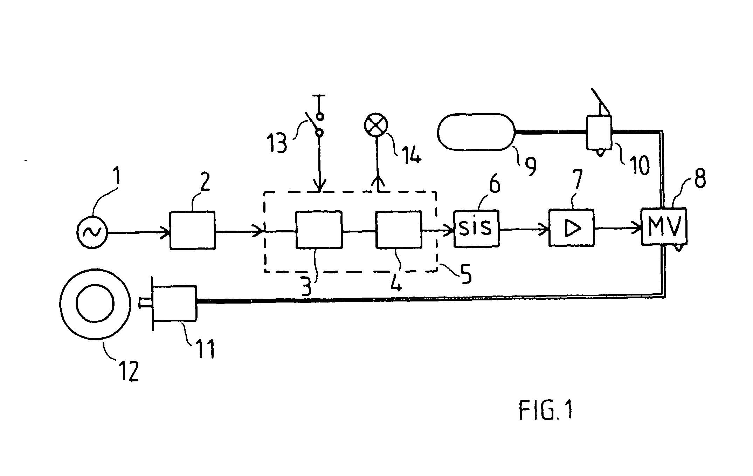

In der Fig. 1 ist schematisch als Blockschaltbild ein Kanal für ein Rad (12) eines bekannten Antiblockiersystems (ABS) für ein Fahrzeug dargestellt. Der elektronische Teil des ABS besteht aus einem Radgeschwindigkeitssensor (1), welcher das Drehverhalten des Fahrzeugrades (12) abtastet. Die Signale des Sensors (1) werden in einer Signalaufbereitungsstufe (2) digitalisiert. In einer nachfolgenden Elektronikstufe (3) werden aus den Radgeschwindigkeitssignalen Beschleunigungssignale (+b), Verzögerungssignale (-b) und Schlupfsignale (λ) gebildet.

Zur Erzeugung der Schlupfsignale (λ) ist eine Fahrzeugreferenzgeschwindigkeit (V_{Ref}) nötig, die mit Hilfe der Geschwindigkeiten der übrigen Räder nachgebildet wird (nicht dargestellt). Es schließt sich eine Logikstufe (4) an, in der aus den erwähnten Regelsignalen Ansteuersignale für ein Magnetventil (8) gebildet werden. Eine nachfolgende Sicherheitsschaltung (SIS) (6) überwacht die Ansteuersignale auf Fehler-Freiheit.

Die Bausteine (3) und (4) sind im allgemeinen durch einen Mikroprozessor (5), der entsprechend programmiert ist, realisiert.

Ein Endverstärker (7) dient zur Verstärkung der Ventilansteuerungs-Signale. Mit einem Gelände-Schalter (13) kann der Fahrer die Regellogik des Bausteines (4) bzw. das Programm des Mikroprozessors (5) auf eine spezielle Geländelogik umschalten. Eine erfolgte Umschaltung ist durch eine ABS-Signallampe (14) erkennbar. Diese wird bei Geländebetrieb vorzugsweise alternierend angesteuert (Blinkbetrieb).

Der pneumatische bzw. hydraulische Teil der blockiergeschützten Bremsanlage besteht aus einem Druckmittelvorratsbehälter (9), einem Fahrer-Bremsventil (10), dem ABS-Regel-Magnetventil (8) und einem Bremszylinder (11). Durch das von der Elektronik bzw. Mikroprozessor (5) angesteuerte Magnetventil (8) kann unabhängig von der Betätigung des Bremsventils (10) durch den Fahrer Druckmittel in den Bremszylinder (11) eingesteuert werden oder bei drohendem Blockieren über das Magnetventil (8) entlüftet und hierdurch eine Drucksenkung verursacht werden. Das Magnetventil (8) weist üblicherweise drei Stellungen auf, in welchen der Druck entweder gesteigert, gehalten oder abgesenkt werden kann.

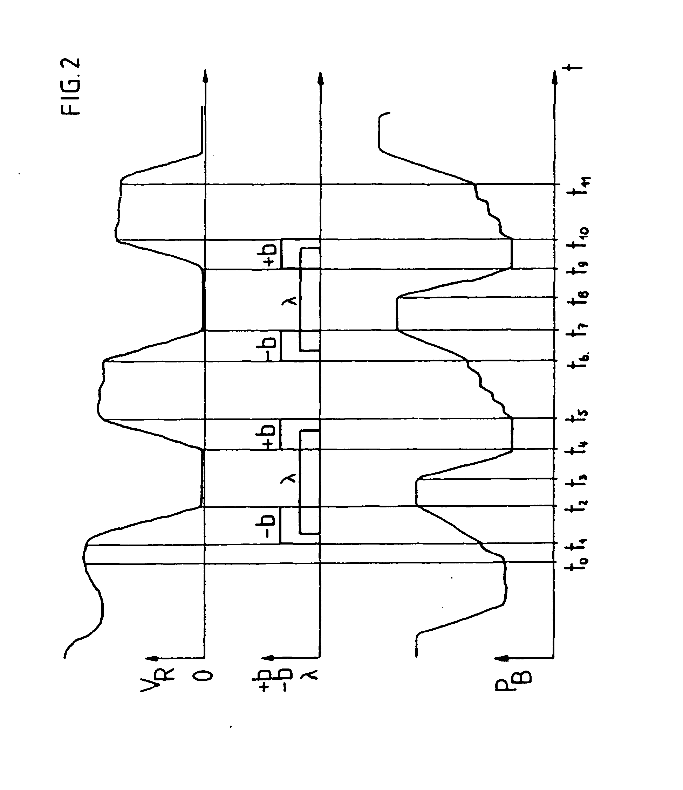

Anhand des in der Fig. 2 dargestellten Diagramms wird im folgenden die Funktionsweise der bekannten Regellogik für Geländebetrieb näher erläutert.

In der Fig. 2 ist im oberen Teil der Verlauf einer Radgeschwindigkeit (V_{R}) des Fahrzeugs bei einer geregelten Bremsung während eines Geländebetriebes bzw. im Gelände-Modus über der Zeit (t) aufgetragen.

Im mittleren Teil der Fig. 2 sind die Regelsignale Radbeschleunigung (+b), Radverzögerung (-b) und Radschlupf (λ) über der Zeit (t) aufgetragen.

Im unteren Teil der Fig. 2 ist der Bremsdruck (pB) des gebremsten Rades über der Zeit (t) aufgetragen. Das Fahrzeug befindet sich in einem ABS-geregelten Bremsvorgang im Gelände (Gelände-Modus gemäß dem Stand der Technik).

Im Zeitpunkt t0 oder früher legt der Fahrer, um die Bremsung im Gelände effektiver zu gestalten, den Gelände-Schalter (13) um. Hierdurch erfolgt innerhalb der Elektronik (5) des Antiblockiersystems die Umschaltung auf die bekannte Gelände-Regellogik. Im Zeitpunkt (t1) verzögert sich das gebremste Rad so sehr, daß ein -b-Signal auftritt. Hierauf wird im Zeitraum (t1) bis (t2) der Bremsdruck schnell erhöht. Dies geschieht im Gegensatz zu normalen ABS-Bremsungen, wo bei Auftreten eines -b-Signals der Bremsdruck schnell abgebaut wird. Die schnelle Bremsdruckerhöhung bringt das Fahrzeugrad (12) zum Blockieren (Zeitpunkt t2). In diesem Moment fällt naturgmäß das -b-Signal ab. Der im Zeitraum (t2) erreichte Bremsdruck wird nun über eine konstante Zeit von etwa 120 ms bis zum Zeitpunkt (t3) auf der erreichten Höhe gehalten. Anschließend wird der Bremsdruck im Zeitraum (t3) bis (t4) schnell abgebaut. Das Blockieren des Fahrzeugrades dauert bis zum Zeitpunkt (t4) (insgesamt 240 ms). Durch den schnellen Abbau des Bremsdruckes läuft das Rad bei Vorlage eines λ-Signales anschließend wieder an. Hierdurch entsteht ein +b-Signal.

Im Zeitraum (t4) bis (t5) ist das Fahrzeugrad bis zur vollen Geschwindigkeit (Fahrzeuggeschwindigkeit) wieder angelaufen. Das +b-Signal fällt daher wieder ab. Spätestens ab diesem Zeitpunkt (t5) wird der Bremsdruck zunächst in Stufen (gepulst) langsam wieder erhöht. Im Zeitpunkt (t6) reicht der so erhöhte Bremsdruck aus, um das Rad wieder so stark zu verzögern, daß ein -b-Signal auftritt. Ab diesem Zeitpunkt (t6) wird dann wieder der volle Bremsdruck eingesteuert, was schnell zum Blockieren des Rades im Zeitpunkt (t7) führt. Der Bremsdruck wird anschließend wieder für die schon erwähnte Zeit von ca. 120 ms konstant gehalten. Anschließend wiederholen sich die bereits beschriebenen Regelvorgänge (Zeitpunkt (t8) bis (t11)). Das Schlupfsignal (λ) tritt auf, sobald sich die Radgeschwindigkeit um einen vorgegebenen Betrag unter die Fahrzeuggegschwindigkeit abgesenkt hat.

Wie man aus der Fig. 2 erkennt, ergeben sich für die Radgeschwindigkeit (v_{R}) Phasen mit einer konstanten Dauer, in denen das Rad voll blockiert ist. Diese Phasen sind etwa 240 ms lang. Hierdurch tritt die oben erwähnte Keilwirkung des losen Untergrundes auf, welche das Fahrzeug besonders stark verzögert. Durch die zwischengeschalteten Abschnitte, in denen das Rad frei laufen kann, wird wiederum eine ausreichende Seitenführungskraft des Rades ermöglicht. Die Regelfrequenz während des Geländebetriebes ist gegenüber der Regelfrequenz bei normalem ABS-Betrieb verringert und beträgt etwa eine Regelperiode pro Sekunde.

Aus Sicherheitsgründen wird die beschriebene Gelände-regellogik nur unterhalb einer Fahrzeuggeschwindigkeit von ca. 40 km/h zugelassen. Wird der Gelände-Schalter (13) schon bei höherer Geschwindigkeit eingeschaltet, so schaltet sich die Regellogik bei der Grenzgeschwindigkeit von ca. 40 km/h selbständig auf Geländebetrieb um.

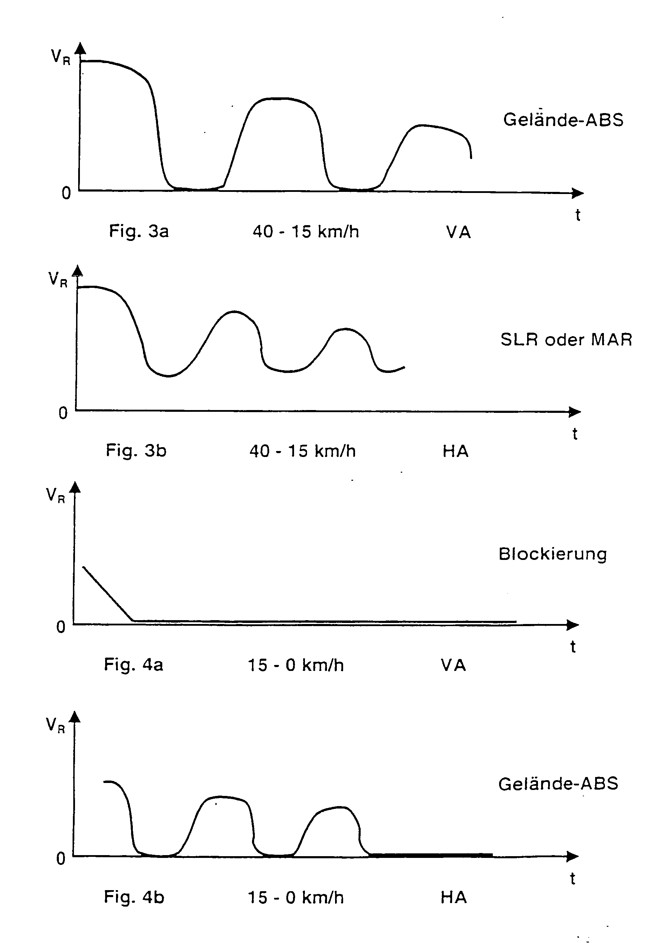

In den Figuren 3a, 3b, 4a, 4b ist die Regelung gemäß dem erfindungsgemäßen Verfahren näher dargestellt. Es ist jeweils eine Radgeschwindigkeit eines Rades der Vorderachse (VA) oder der Hinterachse (HA) über der Zeit (t) aufgetragen.

In der Fig. 3a ist die Radgeschwindigkeit eines Rades der Vorderachse (VA) im Geschwindigkeitsbereich von 40 km/h bis 15 km/h dargestellt. Der ABS-Gelände-Schalter ist eingelegt. Wie in Fig. 2 ergeben sich für die Vorderräder Geschwindigkeitsverläufe, in welchen Phasen mit blockiertem Rad (VR=0) auftreten, wobei die Blockierphasen eine konstante Dauer haben und etwa 240 ms lang sind. In den Blockierphasen kann sich das Rad besonders gut in den lockeren Untergrund eingraben und hierdurch eine hohe Fahrzeugverzögerung erzeugen. In den dazwischenliegenden Phasen läuft die Radgeschwindigkeit bis zur Fahrzeuggeschwindigkeit hoch, wodurch eine gute Seitenführung erreicht wird.

In der Fig. 3b ist für den gleichen Geschwindigkeitsbereich von 40 km/h bis 15 km/h das Radverhalten eines Rades der Hinterachse (HA) dargestellt. Diese wird erfindungsgemäß im Gegensatz zum Stand der Technik nicht nach dem Gelände-Modus der Fig. 3a bzw. Fig. 2 geregelt, sondern nach einer Select-Low-Regelung (SLR) oder einer modifizierten Achsregelung (MAR). Diese beiden Regelarten sind dem Fachmann bekannt.

Bei einer SLR werden beide Räder einer Achse mit dem gleichen Bremsdruck beaufschlagt. Dieser wird so eingeregelt, daß bei µ-Split-Bedingungen das auf der glatten Straßenseite laufende Rad mit großen Radgeschwindigkeitsamplituden geregelt wird, aber nicht blockiert. Hierdurch wird das auf der guten Straßenseite laufende Rad unterbremst und kann dadurch besonders gut zur Spurhaltung des Fahrzeugs beitragen.

Bei einer MAR werden ebenfalls beide Räder der Hinterachse mit dem gleichen Bremsdruck beaufschlagt. Hierbei ist der Bremsdruck jedoch höher, so daß kurze Blockierphasen des auf der glatten Straßenseite laufenden Rades vorkommen können. Eine MAR ist beispielsweise in der EP-B1 0 307 588 beschrieben. Bei Verwendung einer MAR wird bei etwas schlechterer Spurhaltung der Bremsweg des Fahrzeugs verkürzt.

Gemäß Fig. 4a wird im anschließenden Fahrzeuggeschwindigkeitsbereich von 15 km/h bis 0 km/h an der Vorderachse (VA) die ABS-Regelung völlig ausgeschaltet. Dies führt dazu, daß (ausreichende Bremsbetätigung des Fahrers vorausgesetzt) die Räder der Vorderachse blockieren, d. h. die Geschwindigkeit Null aufweisen. Hierdurch wird, wie bereits oben erwähnt, durch das Eingraben der Räder in den losen Untergrund eine besonders hohe Fahrzeugverzögerung erzielt. Allerdings ist das Fahrzeug in diesem Geschwindigkeitsbereich dann bis zum Stillstand nicht mehr lenkbar.

Wie aus der Fig. 4b hervorgeht, ist in dem letzten Geschwindigkeitsbereich des Fahrzeugs zwischen 15 km/h und 0 km/h für die Räder der Hinterachse (HA) ebenfalls wieder eine Umschaltung der Regellogik vorgesehen. Von der oben erwähnten SLR oder MAR wird nun auf die Geländeregelung nach Fig. 3a bzw. Fig. 2 mit Blockierphasen umgeschaltet. Hierdurch erzeugen die Räder der Hinterachse ebenfalls eine relativ hohe Abbremsung des Fahrzeugs, tragen jedoch durch die dazwischenliegenden drucklosen Phasen, in denen sich die Räder weder an die Fahrzeuggeschwindigkeit angleichen können, zu einer guten Seitenführung des Fahrzeugs bei. Hierdurch wird, insbesondere auf Fahrbahnen mit µ-Split-Bedingungen, verhindert, daß sich das Fahrzeug in unzulässiger Weise dreht.

Alternativ ist es auch möglich, im Geschwindigkeitsbereich von 15 km/h bis 0 km/h mit der Regelung aus Fig. 3a und 3b weiter zu regeln. Hierdurch wird das Blockieren der Vorderräder verhindert und das Fahrzeug bleibt lenkbar. Der Bremsweg verlängert sich hierdurch allerdings.

Die obengenannten Geschwindigkeitsbereiche 40 km/h bis 15 km/h bzw. 15 km/h bis 0 km/h sind vorteilhaft in der ABS-Elektronik parametrierbar. Dabei können die Geschwindigkeits-Schwellen zwischen 45 und 35 km/h sowie zwischen 20 und 10 km/h eingestellt werden.

Vorteilhaft wird während des Einsatzes des erfindungsgemäßen Gelände-Modus eine sogenannte MIR-Verknüpfung der Vorderräder aufgehoben. Eine solche (dem Fachmann bekannte) MIR-Logik (MIR = modifizierte Individual-Regelung, siehe z. B. DE-C3-28 51 107) dient bei einer normalen ABS-Bremsung im Straßenbetrieb dazu, daß bei einer Bremsung auf unterschiedlichen Reibwerten der Straße rechts/links (µ-Split) der Aufbau des Giermomentes verzögert wir, und so dem Fahrer das Reagieren mit der Lenkung erleichtert wird. Eine derartige MIR-Logik bringt aber im Gelände keinen besonderen Vorteil.

Vorteilhaft wird weiter eine eingelegte Differential-Längssperre zwischen Vorderachse und Hinterachse des Fahrzeugs während des Gelände-Modus nicht aufgetrennt. Dies liefert speziell beim Bremsen während einer Talfahrt Vorteile. Hier kann es nämlich vorkommen, daß die durch einen ALB-Regler (lastabhängige Bremsung) an der Hinterachse reduzierte Bremskraft nicht zum kurzzeitigen Blockieren der Hinterräder ausreicht (siehe Fig. 4b), wodurch die erwünschte Keilbildung in diesem Geschwindigkeits vor den Hinterrädern ausbleiben würde. Aus diesem Grund ist hier eine Bremskraftkopplung von der Vorderachse zur Hinterachse im Gegensatz zu einer normalen Straßen-ABS-Bremsung erwünscht.

Der Gelände-Modus kann wie erwähnt mit einem Gelände-Schalter (13) einschaltbar sein. Dieser Schalter ist durch den Fahrer vor dem Befahren des Geländes einzuschalten. Es ist aber auch möglich, ein Gelände aus bestimmten Merkmalen des Radverhaltens sowie anderen Merkmalen selbständig zu erkennen. Hierdurch läßt sich ein besonderer Schalter einsparen.

Um dem Fahrer anzuzeigen, daß der Gelände-Modus eingeschaltet ist, wird bei betätigtem Gelände-Schalter (13) eine ABS-Warnleuchte (14) in Intervallen, d. h. im Blinkbetrieb angesteuert. Hierdurch wird der Fahrer darauf aufmerksam gemacht, daß die Fahrzeugräder kurzzeitig in einen blockierten Zustand gelangen können, so daß er seinen Fahrstil darauf einrichten kann. Sobald das Fahrzeug wieder auf normalen Straßen fährt, ist der Gelände-Schalter wieder in die Normalstellung zurückzustellen. Hierdurch werden Beschädigungen der Reifen während der Blockierphasen verhindert.

## Patentansprüche

1. Verfahren zur Regelung des Bremsdruckes bei einem Fahrzeug mit Antiblockiersystem (ABS) in einem Gelände-Modus, wobei unterhalb einer ersten vorgegebenen Fahrzeuggeschwindigkeit und oberhalb einer zweiten vorgegebenen Fahrzeuggeschwindigkeit kurzzeitige Blockierphasen der Räder erzeugt werden,
**dadurch gekennzeichnet, daß** nach der Umschaltung auf den Gelände-Modus unterhalb der ersten vorgegebenen Fahrzeuggeschwindigkeit an den Rädern der Vorderachse kurzzeitige Blockierphasen erzeugt werden, und die Räder der Hinterachse von der normalen Individualregelung (IR) auf eine Select-Low-Regelung (SLR) oder auf eine modifizierte Achsregelung (MAR) geschaltet werden, und
daß unterhalb der zweiten vorgegebenen Fahrzeuggeschwindigkeit die ABS-Regelung der Räder der Vorderachse abgeschaltet wird, und an den Rädern der Hinterachse kurzzeitige Blockierphasen erzeugt werden.

2. Verfahren nach Anspruch 1, **dadurch gekennzeichnet, daß** die erste vorgegebene Fahrzeuggeschwindigkeit etwa 40 km/h beträgt.

3. Verfahren nach Anspruch 1 bis 2, **dadurch gekennzeichnet, daß** die zweite vorgegebene Fahrzeuggeschwindigkeit etwa 15 km/h beträgt.

4. Verfahren nach einem oder mehreren der Ansprüche 1 bis 3, **dadurch gekennzeichnet, daß** während des Gelände-Modus eine modifizierte Individualregelung (MIR) an den Vorderrädern aufgetrennt wird.

5. Verfahren nach einem oder mehreren der Ansprüche 1 bis 4, **dadurch gekennzeichnet, daß** eine eingelegte Differential-Längssperre zwischen Vorderachse und Hinterachse des Fahrzeugs während des Gelände-Modus nicht aufgetrennt wird.

6. Verfahren nach einem oder mehreren der Ansprüche 1 bis **dadurch gekennzeichnet, daß** der Gelände-Modus mit einem Gelände-Schalter (13) einschaltbar ist.

7. Verfahren nach einem oder mehreren der Ansprüche 1 bis 6, **dadurch gekennzeichnet, daß** bei betätigtem Gelände-Schalter (13) eine ABS-Warnleuchte (14) in Intervallen angesteuert wird.

## Claims

1. A method for controlling the brake pressure in a vehicle with anti-lock braking system (ABS) in an off-road mode, wherein short-term wheel locking phases are generated below a first predetermined vehicle speed and above a second predetermined vehicle speed, **characterised in that**, after changing over to the off-road mode, below the first predetermined vehicle speed short-term locking phases are generated on the wheels of the front axle, and the wheels of the rear axle are changed from the normal individual control (IR) to a select-low control (SLR) or to a modified axle control (MAR), and below the second predetermined vehicle speed the ABS control of the wheels of the front axle is disabled, and short-term locking phases are generated on the wheels of the rear axle.

2. A method according to claim 1, **characterised in that** the first predetermined vehicle speed is approximately 40 km/h.

3. A method according to claim 1 or 2, **characterised in that** the second predetermined vehicle speed is approximately 15 km/h.

4. A method according to one or more of claims 1 to 3, **characterised in that** during the off-road mode a modified individual control (MIR) on the front wheels is disconnected.

5. A method according to one or more of claims 1 to 4, **characterised in that** an inbuilt differential longitudinal lock between front axle and rear axle of the vehicle is not disconnected during the off-road mode.

6. A method according to one or more of claims 1 to 5, **characterised in that** the off-road mode is activatable with an off-road switch (13).

7. A method according to one or more of claims 1 to 6, **characterised in that** when the off-road switch (13) is active, an ABS warning light (14) is activated at intervals.

## Revendications

1. Procédé de réglage de la pression de freinage dans un véhicule équipé du système anti-blocage (ABS) en mode tout-terrain, dans lequel de brèves phases de blocage des roues sont générées en deçà d'une première vitesse de véhicule prédéterminée et au-delà d'une seconde vitesse de véhicule prédéterminée, **caractérisé en ce que** de brèves phases de blocage sont générées sur les roues de l'essieu avant en deçà d'une première vitesse prédéterminée après le passage en mode tous terrains, et les roues de l'essieu arrière sont commutées du réglage individuel normal (IR) à un réglage Select-Low (SLR) ou à un réglage d'essieu modifié (MAR), et
**en ce que** le réglage ABS des roues de l'essieu avant est désengagé en deçà de la seconde vitesse de véhicule prédéterminée, et de brèves phases de blocage sont générées sur les roues de l'essieu arrière.

2. Procédé selon la revendication 1, **caractérisé en ce que** la première vitesse de véhicule prédéterminée est environ 40 km/h.

3. Procédé selon la revendication 1 à 2, **caractérisé en ce que** la seconde vitesse de véhicule prédéterminé est environ 15 km/h.

4. Procédé selon l'une ou plusieurs des revendications 1 à 3, **caractérisé en ce qu'**un réglage individuel modifié (MIR) est séparé des roues avant pendant le mode tout-terrain.

5. Procédé selon l'une ou plusieurs des revendications 1 à 4, **caractérisé en ce qu'**un blocage de différentiel longitudinal réglé entre l'essieu avant et l'essieu arrière du véhicule n'est pas séparé pendant le mode tout-terrain.

6. Procédé selon l'une ou plusieurs des revendications 1 à 5, **caractérisé en ce que** le mode tout-terrain peut être enclenché par un commutateur tout-terrain (13).

7. Procédé selon l'une ou plusieurs des revendications 1 à 6, **caractérisé en ce qu'**un témoin lumineux d'ABS (14) est commandé par intervalles par le commutateur tout-terrain actionné (13).
